# EUROPÄISCHE PATENTSCHRIFT

(11) **EP 0 655 688 B1**
(45) Veröffentlichungstag und Bekanntmachung des Hinweises auf die Patenterteilung: **20.10.1999**
(21) Anmeldenummer: 94203443.0
(22) Anmeldetag: 28.11.1994
(51) Int. Cl.: G06F 12/06, G06F 9/32

(54) **Programmspeichererweiterung für einen Mikroprozessor**
Program memory expansion for a microprocessor
Extension de mémoire de programme pour microprocesseur

(30) Priorität: 29.11.1993 DE 4340551
(43) Veröffentlichungstag der Anmeldung: 31.05.1995
(73) Patentinhaber: Philips Patentverwaltung GmbH, 22335 Hamburg (DE); Koninklijke Philips Electronics N.V., 5621 BA Eindhoven (NL)
(72) Erfinder: Gaubatz, Gerald, D-22335 Hamburg (DE)
(74) Vertreter: Peters, Carl Heinrich, Dipl.-Ing.

(56) Entgegenhaltungen:
- EP-A- 0 265 948
- US-A- 3 602 889
- US-A- 4 449 185
- US-A- 5 125 087
- IBM TECHNICAL DISCLOSURE BULLETIN, Bd. 30,Nr. 7, Dezember 1987 NEW YORK, US, Seite 239 'Branching Between Processor Instruction Address Spaces Using Address Key Register Table and Linkage Stack'
- PATENT ABSTRACTS OF JAPAN vol. 008 no. 214 (P-304) ,29.September 1984 & JP-A-59 098254 (FUJITSU KK) 6.Juni 1984

## Beschreibung

Die Erfindung betrifft einen Mikroprozessor gemäß dem Oberbegriff des Patentanspruchs 1.

Ein derartiger Mikroprozessor ist bekannt aus der US-PS 5 255 382. Diese Druckschrift betrifft speziell Mikrocontroller, die von einem Basistyp mit der Bezeichnung 8051 abgeleitet sind, der einen Programmspeicher mit einer Größe von 64K Speicherplätzen adressieren kann. Diese maximal adressierbare Speichergröße ist vor allem dadurch gegeben, daß die Adressen 2 Bytes mit je 8 Bits umfassen, was an den Prozessorkern gut angepaßt ist, da dieser jeweils ein Byte parallel verarbeitet, d.h. der interne Datenbus überträgt 8 Bits parallel, und entsprechend lang ist auch jedes Befehlswort im Programmspeicher. Jede beliebige Adresse des Programmspeichers kann also durch den Inhalt von zwei aufeinanderfolgenden Wörtern im Programmspeicher angegeben werden.

Für viele Anwendungsfälle wird jedoch ein größerer Programmspeicher gewünscht. Die Adressen für einen solchen größeren Programmspeicher umfassen dann jedoch mehr als 2 Bytes, und die zusätzliche Adreßbits werden bei dem bekannten Mikroprozessor von dem ersten Register geliefert. Der Ausgang des ersten Registers ist ferner mit einem gesonderten Stack verbunden, in dem bei einem Sprung in ein Unterprogramm der Inhalt des ersten Registers als Rücksprungadresse gespeichert wird. Der Eingang des ersten Registers ist über einen Multiplexer mit dem Ausgang des zweiten Registers oder mit dem Ausgang des gesonderten Stack verbunden.

Dieser bekannte Mikroprozessor verwendet jedoch für Programmsprünge und Unterprogrammaufrufe neue Befehle, die Funktionen von zwei im Befehlssatz des 8051-Prozessors vorhandenen Befehlen kombinieren. Dadurch sind Programme, die derartige Sprungbefehle enthalten, inkompatibel zu üblichen 8051-Prozessoren bzw. den Programmen dafür. Außerdem ist bei dem bekannten Mikroprozessor ein erheblicher Aufwand für die Speichererweiterung notwendig, und die Adressen für einen solchen erweiterten Speicher sind auf drei zusätzliche Adreßbits beschränkt.

Aufgabe der Erfindung ist es daher, einen Mikroprozessor der eingangs genannten Art anzugeben, der nur wenig Aufwand erfordert, um einen größeren Programmspeicher anzusteuern, ohne die bisherige Befehlsstruktur zu verändern, so daß bereits vorhandene Programme auch weiter verwendet werden können.

Diese Aufgabe wird erfindungsgemäß durch die im Anspruch 1 angegebenen Maßnahmen gelöst.

Auf diese Weise können absolute Sprünge, Sprünge in Unterprogramme und auch durch Interrupt-Signale ausgelöste Sprünge im gesamten Adreßbereich des Programmspeichers ohne die Bildung neuer, nicht im Befehlssatz enthaltener Befehle durchgeführt werden. Außerdem ist kein gesonderter Stack erforderlich, sondern durch die Verbindung des Ausgangs des ersten Registers mit dem Datenbus kann der Stack verwendet werden, in dem auch die übrigen Teile der Adresse bei Sprungbefehlen üblicherweise gespeichert werden. Wenn für den Stack in bekannter Weise der allgemeine Datenspeicher verwendet wird, kann eine nahezu beliebige Anzahl verschachtelter Programme ausgeführt werden, d.h. deren Zahl wird nicht durch die Größe eines gesonderten Stacks begrenzt. Außerdem steht ein vollständiges zusätzliches Adreßbyte zur Verfügung, so daß bis zu 4M Programmspeicher adressiert werden können. Es werden auch keine zusätzlichen Befehle benötigt, sondern lediglich bei absoluten Adreßsprüngen über die Grenzen des Adreßraums von 64K hinweg, der im folgenden als Segment bezeichnet wird, müssen zusätzliche Befehle verwendet werden, mit denen die zusätzlichen Register geladen bzw. deren Inhalt gesichert wird, wobei diese Befehle jedoch aus dem vorhandenen Befehlsvorrat insbesondere zur Durchführung von Datenübertragungen innerhalb des Prozessors stammen.

Eine wichtige Funktion von Mikroprozessoren bzw. Mikrocontrollern ist die Verarbeitung von Interrupt-Signalen. Solche Signale werden bei bestimmten äußeren Zuständen oder auch z.B. von internen Timern erzeugt und bewirken, daß der Mikrocontroller bestimmte Befehlsfolgen in vorgegebenen Adreßbereichen des Programmspeichers ausführt. Dafür wird beim Auftreten eines Unterbrechungssignals ein Adreßsprung auf eine fest vorgegebene Adresse des Programmspeichers ausgelöst, die in einem sehr niedrigen Adreßbereich, d.h. im ersten Segment liegt. Um beim Auftreten eines Interrupt-Signals möglichst schnell einen Sprung auf die zugehörige Adresse des Programmspeichers zu ermöglichen, auch wenn gerade ein höheres Programmspeichersegment adressiert wird, erhalten durch das Sperren der UND-Gatter bei einem Interrupt-Signal alle Bits des höchstwertigen Bytes der Adresse den Wert Null, wodurch automatisch das erste Segment des Programmspeichers angesteuert wird, in dem die Adresse des Interrupt-Unterprogramms liegt. Als Vorteil ergibt sich dabei, daß der alte Inhalt der zusätzlichen Register erhalten bleibt und nach dem Ende des Interrupt-Unterprogramms, wenn dieses das unterste Segment nicht verläßt, automatisch wieder zur Verfügung steht. Lediglich wenn innerhalb eines Interrupt-Unterprogramms ein Sprung in ein höheres Segment des Programmspeichers erfolgt, sind einige zusätzliche Befehle aus dem vorhandenen Befehlsvorrat notwendig, wie später erläutert wird.

Viele Mikroprozessoren, insbesondere solche auf der Basis des bereits genannten Typs 8051, enthalten eine Anzahl Register, die als Spezial-Funktions-Register bezeichnet werden und mit bestimmten Befehlen besonders einfach direkt adressiert werden können. Dabei sind in den Mikroprozessoren allgemein wesentlich weniger Register vorhanden, als durch die Anzahl Bits zur Adressierung in den entsprechenden Befehlen möglich ist. Bei solchen Mikroprozessoren ist es nach einer Ausgestaltung der Erfindung zweckmäßig, daß das erste und das zweite Register gemeinsam ein zusätzliches Spezial-Funktions-Register bilden. Auf diese Weise kann die Einheit aus den beiden Registern mit Befehlen aus dem vorhandenen Befehlssatz sehr schnell angesprochen werden, wobei das Einschreiben hardwaremäßig immer in das zweite Register und das Auslesen immer aus dem ersten Register erfolgt und die Verbindung zwischen beiden Registern ebenfalls hardwaremäßig fest realisiert ist. Damit erfordern die bei Adreßsprüngen gegebenenfalls erforderlichen zusätzlichen Befehle nur wenig zusätzliche Taktzyklen.

Um Sprünge innerhalb eines Interrupt-Unterprogramms auf besonders einfache Weise zu ermöglichen, ist es nach einer weiteren Ausgestaltung der Erfindung vorgesehen, daß die Interrupt-Schaltung ein erstes Speicherglied enthält, das beim Auftreten eines Interrupt-Signals gesetzt und bei der Durchführung eines Adressensprungs über die Segmentgrenzen zurückgesetzt wird und dessen Ausgang mit dem Steuereingang der UND-Gatter über ein NAND-Gatter gekoppelt ist, von dem ein weiterer Eingang mit der Verarbeitungseinheit zum Empfangen eines Signals während der Ausführung einer Interrupt-Routine gekoppelt ist. Auf diese Weise wird bei einem solchen Sprung innerhalb des Interrupt-Unterprogramms die Sperre der UND-Gatter aufgehoben, so daß dann auch andere Segmente des Programmspeichers adressiert werden können.

Die Zähltakt-Schaltung soll den Übergang von einem Segment des Programmspeichers in ein benachbartes Segment automatisch auslösen, so daß für den normalen Programmablauf der Programmspeicher als ein einziger zusammenhängender Adreßbereich erscheint. Dies soll auch für den Fall relativer Programmsprünge zutreffen, die über die Grenze des durch 2 Adreßbytes gegebenen Segments erfolgen. Um dies leicht zu erreichen, ist eine weitere Ausgestaltung der Erfindung dadurch gekennzeichnet, daß die Zähltakt-Schaltung mit Ausgängen für die beiden höchstwertigen Adreßbits des Programmzählers gekoppelt ist und eine zweite Speicherstufe, die den Signalzustand des höchstwertigen Adreßbits für eine vorgegebene Zeitdauer nach einem Zustandswechsel dieses Adreßbits speichert, sowie zwei Gatter mit je wenigstens drei Eingängen enthält, wobei die Eingänge jedes Gatters mit wenigstens einem Ausgang der Speicherstufe sowie mit den Ausgängen für die beiden höchstwertigen Adreßbits derart gekoppelt sind, daß das eine Gatter einen Aufwärts-Zähltakt für das erste Register abgibt, wenn beide Adreßbits ihren Zustand von hoch nach niedrig wechseln, und das andere Gatter einen Abwärts-Zähltakt für das erste Register abgibt, wenn beide Adreßbits ihren Zustand von niedrig nach hoch wechseln. Durch die Verwendung von nur der höchstwertigen beiden Bits der unteren beiden Adreßbits ist es möglich, beim Überschreiten einer Segmentgrenze die Richtung zu unterscheiden, in der diese Grenze passiert wird, so daß automatisch richtig ein Aufwärts-Zähltakt oder Abwärts-Zähltakt abhängig von dieser Richtung erzeugt wird.

Es ist klar, daß der Programmspeicher nicht ein einziger Speicher sein muß, der mit dem Mikrocontroller auf einem Chip integriert ist, sondern er kann auch aus mehreren Teilen für jeweils verschiedene Adreßbereiche bestehen, wobei zumindest einige Teile auch außerhalb des Mikrocontrollers in getrennten Bausteinen vorhanden sein können.

Ausführungsbeispiele der Erfindung werden nachstehend näher anhand der Zeichnung erläutert. Es zeigen:
Fig. 1 ein Blockschaltbild einiger erfindungswesentlicher Teile eines Mikrocontrollers,
Fig. 2 eine Ausführungsform der Zählschaltung in Fig. 1,
Fig. 3 ein Diagramm zur Erläuterung der Erzeugung der Ausgangssignale der Zählschaltung.

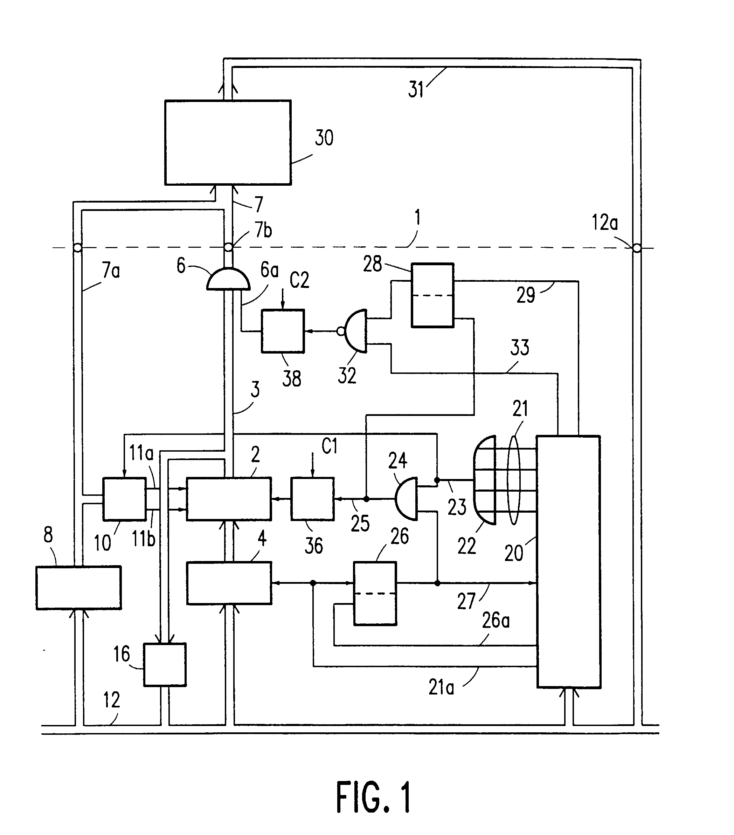

In Fig. 1 enthält ein Mikrocontroller 1 eine Anzahl Schaltungen bzw. Elemente, von denen hier nur einige dargestellt sind. Der Mikrocontroller 1 ist über einen Adreßbus 7 mit einem Programmspeicher 30 verbunden, der außerhalb des Mikrocontrollers angeordnet ist, der jedoch hier nur einen Teil des gesamten Programmspeichers darstellen möge, während ein weiterer, insbesondere kleinerer Teil für die untersten Adressen in dem Mikrocontroller 1 enthalten ist, was hier jedoch der Einfachheit halber nicht näher dargestellt ist. Der Datenausgang des Programmspeichers 30 ist über eine parallele Verbindung 31 mit einem Datenanschluß 12a des Mikrocontrollers 1 verbunden, der auf den Datenbus 12 führt. Eventuell vorhandene Schalter in Datenwegen sind hier der Übersichtlichkeit halber weggelassen, da sie für das Prinzip der Funktion nicht von Bedeutung sind.

An den internen Datenbus 12 ist eine Verarbeitungseinheit 20 angeschlossen, die insbesondere empfangene Befehle entschlüsselt und verschiedene Steuersignale über getrennte Steuerleitungen abgibt. Von diesen Steuerleitungen sind hier nur einige angegeben, die später erläutert werden.

Ferner ist ein Programmzähler 8 vorhanden, der über eine Verbindung 7a einen Teil der Adreßbits der Adresse für den Programmspeicher 30 liefert. Es wird angenommen, daß der Programmzähler 8 2 Bytes breit ist und somit die Adreßbits A0 bis A15 über die Verbindung 7a abgibt.

Schließlich sind noch zwei Register 2 und 4 vorhanden, von denen das Register 2 Daten vom Register 4 übernehmen kann und übernommene Daten über eine Verbindung 3 und eine UND-Gatteranordnung 6 über einen Adreßausgang 7b des Mikrocontrollers 1 als ein Teil der Adreßbits für den Adreßbus 7 abgibt. Die Gatteranordnung 6 enthält für jede einzelne Leitung in der Verbindung 3 ein einzelnes UND-Gatter, die alle über einen Steuereingang 6a gemeinsam gesteuert werden. Der Ausgang des Registers 2 ist über die Verbindung 3 außerdem mit einem Schalter 16 verbunden, über den der Inhalt des Registers 2 auf den internen Datenbus 12 übertragen werden kann. Ferner kann der Inhalt des Registers 2 durch einen Zähltakt auf einer der Leitungen 11a und 11b um jeweils eine Einheit erhöht oder erniedrigt werden. Diese Zähltake auf den Leitungen 11a und 11b werden von einer Zähltakt-Schaltung 10 geliefert.

Ein paralleler Eingang des Registers 4 ist mit dem internen Datenbus 12 verbunden und übernimmt den Wert auf diesem internen Datenbus 12 mit einem Schreibsignal auf einer Leitung 21a, die von der Befehlsentschlüsselung in der Verarbeitungseinheit 20 kommt. Weitere Elemente, die in Fig. 1 dargestellt sind, werden nachfolgend bei der Beschreibung verschiedener Funktionen näher erläutert.

Zunächst wird angenommen, daß ein einfaches Programm in Form einer linearen Befehlsfolge ausgeführt wird. Der Inhalt des Programmspeichers bzw. der Adreßbereich für die Adressierung dieses Inhalts wird in Segmente eingeteilt, wobei der Adreßbereich eines Segments durch die Stellenzahl des Programmzählers 8 bestimmt wird, z.B. 16 Stellen entsprechend 2 Byte. Die einzelnen Segmente werden durch den Inhalt des Registers 2 bestimmt. Wenn nun das lineare Programm eine Segmentgrenze überschreitet, d.h. der Programmzähler 8 geht über seine höchste Stellung auf die Anfangsstellung zurück, wird von der Zähltakt-Schaltung 10, die mit einigen Ausgängen des Programmzählers 8 verbunden ist, ein Aufwärts-Zähltakt auf der Leitung lla für das Register 2 erzeugt, so daß dessen Inhalt um eine Einheit weiter gezählt wird. Damit wird automatisch der Anfang des folgenden Segments im Programmspeicher adressiert, ohne daß hierfür innerhalb des Programms irgendwelche Maßnahmen erforderlich sind.

Programme enthalten jedoch normalerweise Sprünge, wobei relative und absolute Sprünge zu unterscheiden sind. Bei einem relativen Sprung wird zu dem Inhalt des Programmzählers 8 ein Wert hinzugezählt oder von diesem Inhalt subtrahiert, wobei dieser Wert in dem Befehl, vorzugsweise im zweiten Byte eines 2-Byte-Befehls angegeben ist. Wenn bei einem Aufwärts-Sprung des Programmzählers 8 seine maximale Stellung überschritten wird, d.h. eine Segmentgrenze wird überschritten, erzeugt die Zähltakt-Schaltung 10 ebenfalls einen Aufwärts-Zähltakt für das Register 2 auf der Leitung 11a. Entsprechendes gilt für einen Rücksprung, wenn eine Segmentgrenze gerade in Vorwärtsrichtung überschritten war und nun ein Rücksprung über die Segmentgrenze erfolgt. Dabei springt der Programmzähler 8 von einem niedrigen Wert auf einen hohen Wert, und die Zähltakt-Schaltung 10 erzeugt auf der Leitung llb einen Abwärts-Zähltakt, der den Inhalt des Registers 2 um eine Einheit erniedrigt. Dabei wird davon ausgegangen, daß ein relativer Sprung nur über einen kleinen Teil des Adreßbereichs eines Segments erfolgen kann. In jedem Falle wird das Register 2 bei einem relativen Sprung automatisch in der richtigen Weise verändert, ohne daß innerhalb des Programms besondere Maßnahmen ergriffen werden müssen.

Dies ist jedoch bei absoluten Sprüngen anders. Diese können praktisch beliebig groß sein, und bei einem solchen Sprung wird die Zieladresse, an der das Programm fortgesetzt werden soll, im Sprungbefehl direkt angegeben. Ein solcher Sprungbefehl im vorhandenen Befehlsvorrat umfaßt 3 Bytes, von denen die letzten beiden Bytes für die Angabe der Zieladresse vorgesehen sind. Solange ein Sprung nur innerhalb eines Segments erfolgt, wird der Inhalt des Registers 2 nicht verändert. Dazu reicht ein einfacher Sprungbefehl im Programm aus.

Wenn jedoch auch ein Sprung in ein anderes Segment erfolgen soll, muß auch der Inhalt des Registers 2 verändert werden. Dies erfolgt mit einem normalen Datentransportbefehl, wobei das Register 2 und das Register 4 als Einheit betrachtet und mit PACE bezeichnet werden, und dieses einheitliche Register PACE ist ein Spezial-Funktions-Register mit einer bei bekannten Mikrocontrollern nicht benutzten Adresse, so daß ein Adressensprung im Programm wie folgt aussieht:

| | | |
|---|---|---|
| 1 | MOV | PACE,#data |
| 2 | LJMP | addr16 |

Der Befehl 1 bedeutet, daß der Wert "data", der in diesem Befehl im zweiten Byte angegeben ist, in das Register PACE übertragen wird. Bei der in Fig. 1 dargestellten Schaltung bedeutet dies, daß auf der Leitung 21a ein Schreibsignal erzeugt wird, mit dem der Wert "data" in das Register 4 eingeschrieben wird, und gleichzeitig wird mit diesem Schreibbefehl ein Flipflop 26 gesetzt. Dadurch entsteht auf der Leitung 27 ein hohes Signal, mit dem ein UND-Gatter 24 freigegeben wird und das außerdem der Verarbeitungseinheit 20 zugeführt wird, wo dieses Signal verhindert, daß ein eventuell eintreffendes Interrupt-Signal unmittelbar verarbeitet wird. Dadurch wird gewährleistet, daß ein Adressensprung, der in diesem Falle zwei Befehle umfaßt, wirklich zusammenhängend ausgeführt wird, da sonst unter bestimmten Bedingungen Fehlfunktionen auftreten können.

Mit dem Befehl 2 wird der Programmzähler 8 auf die in diesem Befehl angegebene 2-Byte-Adresse gesetzt. Dabei erzeugt die Verarbeitungseinheit 20 an einem der Ausgänge 21, die entschlüsselten Sprungbefehlen zugeordnet sind, ein Signal, das über ein ODER-Gatter 22, die Leitung 23, das UND-Gatter 24 und die Leitung 25 auf ein Verzögerungsglied 36 gelangt, das dieses Signal erst mit einer bestimmten Taktphase C1 innerhalb des Befehlsablaufs wirksam werden läßt, nämlich genau zu dem Zeitpunkt, zu dem der Programmzähler 8 die neue Adresse am Ausgang wirksam werden läßt, und zu diesem Zeitpunkt wird der Inhalt des Registers 4 in das Register 2 übertragen, so daß alle Bytes der neuen Adresse gleichzeitig auf dem Adreßbus 7 erscheinen. Das Flipflop 26 wird über ein Signal von der Verarbeitungseinheit 20 über die Leitung 26a wieder zurückgesetzt. Dieses Signal erscheint bei jedem Befehl, und damit ist sichergestellt, daß normalerweise ein Interrupt-Signal sofort verarbeitet werden kann.

Die Zähltakt-Schaltung 10 wird bei absoluten Progammsprüngen nicht benötigt, jedoch muß verhindert werden, daß keine falschen Zähltakt-Signale auftreten. Wenn nämlich z.B. ein Sprung von einer Adresse am Anfang eines Segments zu einer Adresse am Ende eines Segments erfolgt, erscheint dies für die Zähltakt-Schaltung wie ein kurzer relativer Sprung rückwärts über die Segmentgrenze. Daher ist die Leitung 23, auf der durch das ODER-Gatter 22 bei jedem absoluten Sprung ein Signal auftritt, auch zur Zähltakt-Schaltung 10 geführt, um dort jedes eventuell erzeugte Zähltakt-Signal zu unterdrücken.

Eine besondere Art von absoluten Sprüngen tritt auf, wenn innerhalb eines Programmablaufs ein Unterprogramm aufgerufen werden soll, das an einer bestimmten entfernten Speicherstelle beginnt. In diesem Falle muß nämlich nach der Beendigung des Unterprogramms automatisch an die Stelle zurückgekehrt werden, von der aus das Unterprogramm aufgerufen wurde. Dazu muß die momentane Programmadresse beim Aufruf eines Unterprogramms zwischengespeichert werden, was auf dem sogenannten Stack erfolgt. Dies ist ein Speicherbereich in einem nicht näher dargestellten Datenspeicher, der von einer bestimmten Adressieranordnung adressiert wird. Das Zwischenspeichern des Inhalts des Programmzählers 8 beim Aufruf eines Unterprogramms erfolgt bei der Befehlsausführung automatisch, jedoch muß nun zusätzlich noch der Inhalt des Registers 2 zwischengespeichert werden. Dies erfolgt durch die nachstehend angegebene Befehlsfolge:

| | | | |
|---|---|---|---|
| | 3 | MOV | direct,PACE |
| | 4 | MOV | PACE,#data |
| | 5 | LCALL | SUBR |
| | | . | |
| | | . | |
| Subr: | 6 | PUSH | direct |
| | | . | |
| | | . | |
| | | . | |
| | 7 | POP | PACE |
| | 8 | RET | |

Mit dem Befehl 3 wird der Inhalt des Registers 2, also des mit PACE bezeichneten Registers, über den Schalter 16 ausgelesen und über den internen Datenbus 12 in eine Speicherstelle eines nicht dargestellten Datenspeichers übertragen, die durch die Adresse "direct" angegeben ist. Diese Adresse wird zweckmäßig nur für diese Programmsprünge reserviert und sonst nicht benutzt.

Mit dem Befehl 4 wird der im Befehl enthaltene Wert "data" in das Register 4 eingeschrieben. Dieser Wert gibt dasjenige Segment an, in dem das nun folgende Unterprogramm beginnt. Mit dem Befehl 5 wird schließlich in üblicher Weise der Inhalt des BEfehlszählers 8 im Stack abgelegt und danach der Progammzähler 8 auf die Adresse gesetzt, an der das Unterprogramm in dem betreffenden Segment beginnt, und gleichzeitig wird wieder über das ODER-Gatter 22, das UND-Gatter 24 und den Block 36 ein Ladesignal zum Laden des Inhalts des Registers 4 in das Register 2 erzeugt. Damit steht nun auf dem Adreßbus 7 die vollständige Adresse für den Beginn des Unterprogramms zur Verfügung. Die folgenden Befehle des Hauptprogramms sind nicht von Bedeutung und daher hier nur durch Punkte angedeutet.

Im Unterprogramm ist der erste Befehl der Befehl 6, mit dem der Inhalt des Speicherplatzes "direct" in dem Stack abgespeichert wird, und zwar unmittelbar hinter dem Wert des Programmzählers 8, bei dem also das Hauptprogramm verlassen wurde. Damit ist die Rücksprungadresse in der richtigen Reihenfolge im Stack abgelegt.

Nun folgen die Befehle zur Ausführung des Unterprogramms, und am Ende tritt der Befehl 7 auf, mit dem das Segmentadreßbyte der Rücksprungadresse vom Stack in das Register PACE geladen wird. Dies bedeutet, daß dieser Wert in das Register 4 eingeschrieben wird. Der Befehl 8 bedeutet den Rücksprung in das Hauptprogramm, indem der Programmzähler 8 wieder mit dem Inhalt der vorhergehenden Speicherplätze des Stack geladen wird, und gleichzeitig mit diesem Laden wird auch der Inhalt des Registers 4 in das Register 2 übertragen, und damit stehen wieder gleichzeitig alle Bytes der Adresse des Hauptprogramms zur Verfügung.

Es sei bemerkt, daß die Befehlsabfolge für alle segmentgrenzenüberschreitenden Unterprogrammaufrufe gleich ist, ebenso wie die willkürlich wählbare Adresse "direct", da diese nur bei der Ausführung des Befehlssprungs benötigt wird und nach dem Befehl 6 bereits wieder frei ist.

Bisher wurde davon ausgegangen, daß die UND-Gatteranordnung 6 über den gemeinsamen Steuereingang 6a freigegeben war. Dies war bei den bisher beschriebenen Befehlsabläufen der Fall, weil mindestens die Leitung 33 von der Verarbeitungsanordnung 20 ständig ein logisches Signal "Null" erhält und damit über das NAND-Gatter 32 ständig ein hohes Potential erzeugt wird, das über die Schaltung 38 direkt weitergeleitet wird. Im übrigen wird bei einem der vorher beschriebenen Programmsprünge in ein anderes Segment über das dann auftretende Signal auf der Leitung 25 ein Flipflop 28 in eine Stellung gesetzt, in der es ebenfalls ein hohes Potential an das ODER-Gatter 32 liefert.

Es muß nun auch beim Auftreten von Interrupt-Signalen ein korrekter Programmablauf gewährleistet sein. Dabei muß dann ein Programmsprung in das unterste Segment an eine bestimmte Speicherstelle des Programmspeichers erfolgen bzw., wenn mehrere verschiedene Interrupt-Signale mit u.U. unterschiedlicher Priorität verarbeitet werden können, ein Programmsprung in das unterste Segment an eine vom Interrupt-Signal abhängige Speicherstelle. Diese Speicherstellen sind fest vorgegeben. Die Interrupt-Signale werden der Verarbeitungsanordnung 20 über nicht dargestellte Eingänge zugeführt.

Wenn ein Interrupt-Signal auftritt, erscheint auf den Leitungen 29 und 33 ein hohes Signal. Damit wird das Flipflop 28 umgeschaltet und führt dem NAND-Gatter 32 ebenfalls ein hohes Signal zu. Damit empfängt die Schaltung 38 ein niedriges Signal vom NAND-Gatter 32, und bei einer bestimmten Phase C2 innerhalb des Interrupt-Befehls, nämlich wenn der Programmzähler 8 auf die Interrupt-Adresse gesetzt wird, wird dieses niedrige Signal vom ODER-Gatter 32 auch auf die Steuerleitung 6a durchgeschaltet, so daß die Gatteranordnung 6 gesperrt wird und am Ausgang 7b alle Bits den Wert "0" haben, d.h. es wird automatisch das unterste Segment adressiert. Der Inhalt des Registers 2 bleibt dabei erhalten.

Wenn das Interrupt-Programm, das an der Interrupt-Adresse beginnt, vollständig im untersten Segment enthalten ist, wie es meistens der Fall sein wird, wird am Ende des Interrupt-Programms der Programmzähler 8 durch den Rücksprung-Befehl am Ende des Interrupt-Programms auf die Adresse des Hauptprogramms gesetzt, die der Stelle folgte, an der das Unterbrechungssignal aufgetreten ist. Gleichzeitig wird das Signal auf der Leitung 33 wieder niedrig, und damit erhält das NAND-Gatter 32 wieder ein niedriges Eingangssignal und erzeugt ein hohes Ausgangssignal, das über die Schaltung 38 und die Steuerleitung 6a auf die UND-Gatteranordnung 6 gelangt, so daß automatisch wieder dasselbe Segment adressiert wird wie an der Stelle des Hauptprogramms, an der das Unterbrechungssignal aufgetreten war. Für diese Interrupt-Programme sind also keine besonderen Maßnahmen innerhalb des Programms erforderlich.

Es kann jedoch der Fall auftreten, daß ein Interruptprogramm ein Unterprogramm benötigt, das in einem anderen Segment des Programmspeichers enthalten ist. Das bedeutet, daß innerhalb des Interrupt-Programms ein Programmsprung ausgeführt werden muß, der auch den Inhalt des Registers 2 verändert. In diesem Falle muß jedoch der momentane Inhalt des Registers 2 gesichert und zurückgeladen werden, wenn das Interrupt-Programm beendet wird. Hinzu kommt, daß ein Interrupt-Signal zu beliebigen Zeiten auftreten kann, beispielsweise auch zwischen den Befehlen 3 und 4 des vorher beschriebenen normalen Programmsprungs. Lediglich zwischen den Befehlen 4 und 5 wird ein Interrupt-Befehl nicht unmittelbar ausgeführt, sondern die Ausführung beginnt dann erst nach dem Befehl 5. Wenn aber nach dem Befehl 3 ein Sprung in ein Interrupt-Programm erfolgt, erfolgt nach dessen Ausführung der Rücksprung zum Befehl 4, und das folgende Programm geht davon aus, daß an der Adresse "direct" im Befehl 3 der Inhalt des Registers 2, also PACE, enthalten ist. Daher muß der Inhalt der Adresse "direct" ebenfalls gesichert werden, denn bei einem Unterprogrammaufruf in einem anderen Segment innerhalb der Ausführung des Interrupt-Programms wird die Adresse "direct" ebenfalls verwendet.

Aus diesem Grund muß ein solches Interrupt-Programm wie folgt aufgebaut sein:

| | | |
|---|---|---|
| 9 | PUSH | PACE |
| 10 | PUSH | direct |
| | . | |
| | . | |
| | . | |
| 11 | MOV | direct,#0 |
| 12 | MOV | PACE,#data |
| 13 | LCALL | SUBR |
| | . | |
| | . | |
| | . | |
| 14 | POP | direct |
| 15 | POP | PACE |
| 16 | RETI | |

Mit dem Sprung in das Interrupt-Programm wird der vorhergehende Inhalt des Programmzählers 8 im Stack gespeichert. Der erste Befehl im Interrupt-Programm ist der Befehl 9, mit dem dann der noch vorhandene Inhalt von PACE auf dem Stack gesichert wird. Mit dem folgenden Befehl 10 wird daran anschließend im Stack auch der Inhalt der Adresse "direct" gesichert. Nun beginnt das eigentliche Interrupt-Programm, wie durch die Punkte angedeutet ist.

Die Befehle 9 und 10 können auch an anderen Stellen vor dem Befehl 11 im Interrupt-Programm stehen.

Wenn nun ein Programmsprung zu einem Unterprogramm in einem anderen Segment erfolgen soll, muß wieder im Prinzip die Befehlsfolge 3 bis 5 wie bei einem normalen Programmsprung erfolgen. Dabei muß jedoch sichergestellt werden, daß der Rücksprung aus diesem Unterprogramm wieder in das unterste Segment mit der Segmentadresse "0" erfolgt, von wo aus der Programmsprung aus dem Interrupt-Programm erfolgt. Dazu wird im Befehl 11 nun nicht der Inhalt von PACE, der sich ja auf das früher unterbrochene Programm bezieht und im übrigen im Befehl 9 bereits gesichert ist, sondern der Wert "0" (entsprechend Segment 0) geladen. Die Befehle 12 und 13 entsprechen dann unmittelbar den Befehlen 4 und 5 bei einem normalen Programmsprung.

Das Unterprogramm selbst ist hier nicht näher angedeutet, beginnt jedoch ebenfalls wie beim vorher beschriebenen normalen Programmsprung mit dem Befehl 6, mit dem der Inhalt der Adresse "direct", d.h. nun der Wert "0", in den Stack im Anschluß an die beim Befehl 13 gespeicherte Adresse des Befehlszählers 8 gespeichert wird. Am Ende dieses Unterprogramms folgt dann der Befehl 7, mit dem der Wert "0" aus dem Stack in PACE geladen wird, und dann erfolgt der Rücksprung in das Interrupt-Programm im Segment "0". Hier wird klar, weshalb durch die Befehle 9 und 10 der ursprüngliche Inhalt von PACE und der Adresse "direct" im Stack zwischengespeichert werden muß.

Nach dem Rücksprung in das Interrupt-Hauptprogramm wird dieses fortgesetzt, und am Ende des Interrupt-Programms folgen die Befehle 14 und 15, mit denen der alte Zustand vor dem Interrupt-Signal in PACE und der Adresse "direct" wieder hergestellt wird. Mit dem Befehl 16 folgt schließlich der normale Rücksprung in das unterbrochene Hauptprogramm, das dann normal fortgesetzt werden kann.

Bei dieser Befehlsfolge laufen in der Schaltung nach Fig. 1 folgende Funktionen ab. Mit dem Sprung in das Interrupt-Programm wird, wie vorher beschrieben, die Gatteranordnung 6 gesperrt und das Flipflop 28 umgeschaltet. Die Befehle 9, 10 und 11 des Interrupt-Programms sind Datentransportbefehle, die sich auf die dargestellte Schaltung praktisch nicht auswirken.

Mit dem Befehl 12 wird der Wert "data" dem Register 4 zugeführt und durch ein bei diesem Befehl erzeugtes Schreibsignal auf der Leitung 21a in das Register 4 eingeschrieben, und gleichzeitig wird das Flipflop 26 umgeschaltet. Beim folgenden Befehl 13 wird über eine der Ausgangsleitungen 21, das ODER-Gatter 22, das nun über die Leitung 27 freigegebene UND-Gatter 24 und die Schaltung 36 ein Schreibsignal auf das Register 2 gegeben, wodurch der Inhalt des Registers 4 übernommen wird. Durch das auf der Leitung 25 vom UND-Gatter 24 erzeugte Signal wird aber außerdem das Flipflop 28 wieder zurückgeschaltet, da das Signal auf der Leitung 29 nur beim Sprung in das Interrupt-Programm erzeugt wurde. Damit erhält nun das NAND-Gatter 32 wieder an einem Eingang ein niedriges Signal, wodurch mit entsprechender Verzögerung in der Schaltung 38 die Steuerleitung 6a ein hohes Signal erhält und die Gatteranordnung 6 freigibt, so daß der in das Register 2 übertragene Inhalt am zusätzlichen Adressenausgang 7b für die Adressierung des Programmspeichers erscheint. Damit werden nun die Befehle des Unterprogramms adressiert, während das Flipflop 28 seinen Zustand beibehält und ständig die UND-Gatteranordnung 6 freigibt. Dies gilt auch, wenn am Ende des Unterprogramms der Rücksprung in das Interrupt-Programm erfolgt, und auch beim Rücksprung aus dem Interrupt-Programm in das unterbrochene Hauptprogramm. Von diesem Zeitpunkt an hat dann auch wieder die Leitung 33 ein niedriges Signal, wodurch das NAND-Gatter 32 ein zweites niedriges Signal empfängt, was jedoch am freigegebenen Zustand der UND-Gatteranordnung nichts ändert. Der Adreßausgang 7b wird also dauernd vom Inhalt des Registers 2 bestimmt.

Auf diese Weise sind Programmsprünge in beliebige Segmente des Programmspeichers möglich, wobei nur wenige zusätzliche Befehle aus dem üblichen Befehlsvorrat erforderlich sind.

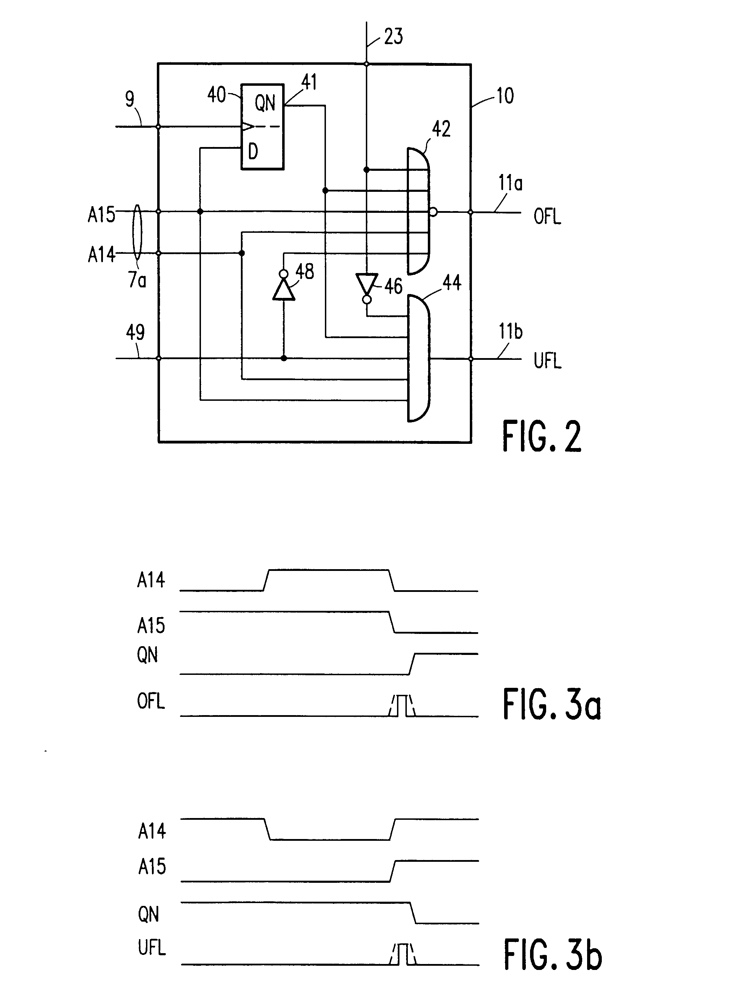

Die meisten Elemente der in Fig. 1 dargestellten Schaltung, wie Register, Gatter und Flipflops, sind in ihrem Aufbau allgemein bekannt. Die Verarbeitungsanordnung 20 stellt den Kern eines üblichen Mikroprozessors dar und enthält insofern auch keine Besonderheiten. Lediglich für die Zähltakt-Schaltung 10 wird nachfolgend eine mögliche Ausführungsform anhand der Fig. 2 und 3 beschrieben.

In Fig. 2 enthält die Zähltakt-Schaltung 10 ein Flipflop 40, ein NOR-Gatter 42 und ein UND-Gatter 44 sowie zwei Inverter 46 und 48. A14 und A15 stellen die beiden höchsten Bits des Programmzählers 8 auf der Verbindung 7a in Fig. 1 dar. Über die Leitung 9 wird ein Taktsignal zugeführt, das jeweils vor einem Adreßwechsel des Programmzählers auftritt. Über die Leitung 49 wird ein weiteres Taktsignal zugeführt, das kurz nach einem Adreßwechsel des Programmzählers auftritt, also dann, wenn ein neuer Befehl aus dem Programmspeicher gelesen werden soll. Ein erzeugtes Zähltakt-Signal erscheint auf der Leitung 11a bzw. 11b. Über ein Signal auf der Leitung 23 wird die Erzeugung eines Zähltakt-Signals verhindert.

Zunächst wird angenommen, daß das Signal auf der Leitung 23 niedrig ist, so daß der Inverter 46 ein hohes Signal abgibt. Das Flipflop 40 ist ein D-Flipflop, dessen D-Eingang mit dem höchstwertigen Adreßbit A15 verbunden ist. Das Signal QN am Ausgang 41 des Flipflops 40 folgt invertiert jeweils bei der positiven Flanke des Taktsignals auf der Leitung 9 dem Verlauf des Signals auf dem höchstwertigen Adreßbit A15, wie aus Fig. 3a zu erkennen ist.

Wenn nun angenommen wird, daß der Programmzähler linear bis zu seiner höchsten Stellung aufwärts gezählt wird, wobei das Adreßbit A14 zunächst auf einen hohen Signalwert geht, den das Adreßbit A15 bereits hat, gehen nach der maximalen Stellung mit dem nächsten Taktsignal für den Programmzähler beide Adreßbit A14 und A15 praktisch gleichzeitig auf einen niedrigen Signalwert, während der Ausgang QN des Flipflops 40 noch einen niedrigen Signalwert hat. Wenn zunächst das Ausgangssignal des Inverters 48 nicht berücksichtigt wird, würde auf der mit OFL (Überlauf) bezeichneten Ausgangsleitung 11a ein Signal entstehen, wie in Fig. 3a gestrichelt gezeichnet ist. Aus diesem Signal wird durch einen kurzen positiven Impuls auf der Leitung 49 ein Impuls ausgeblendet, der in Fig. 3a mit einer ausgezogenen Linie dargestellt ist und der u.a. auch dafür sorgt, daß bei bestimmten Bedingungen Störimpulse zuverlässig vermieden werden. Aus Fig. 3 ist zu erkennen, daß der OFL-Impuls auch erzeugt wird, wenn der Programmzähler 8 in Fig. 1 durch einen Sprung von einem hohen Wert auf einen niedrigen Wert geht, solange dieser Sprung nicht zu groß wird, d.h. solange sich beide Adreßbits A14 und A15 von einem hohen zu einem niedrigen Wert ändern.

Ein entsprechender Vorgang erfolgt auch beim Rückwärtszählen bzw. hier bei einem Rückwärtssprung des Programmzählers 8 von einer niedrigen Stellung am Anfang eines Segments in eine hohe Stellung am Ende eines vorhergehenden Segments. In der niedrigen Stellung des Programmzählers 8 haben beide Adreßbit A14 und A15 einen niedrigen Wert. Bei einem begrenzten Rückwärtssprung über die Segmentgrenze nehmen beide Adreßbit A14 und A15 einen hohen Wert an, während der Ausgang QN des Flipflops 40 noch einen hohen Wert für eine Taktphase behält. Damit tritt an dem mit UFL (Borgen) bezeichneten Ausgang 11b ein Signal auf, das in Fig. 3b gestrichelt dargestellt ist. Auch hier wird durch einen kurzen positiven Impuls auf der Leitung 49 ein Impuls ausgeblendet, der in Fig. 3b mit einer ausgezogenen Linie dargestellt ist.

Aus der in Fig. 2 dargestellten Schaltung ist leicht zu erkennen, daß durch ein hohes Signal auf der Leitung 23 jedes Ausgangssignal OFL bzw. UFL unterdrückt werden kann.

Das muß für jeden Sprungbefehl erfolgen, mit dem innerhalb des gesamten Segment-Adreßbereichs gesprungen werden kann, also beispielsweise vom Segment-Anfang zum -Ende. Diese Befehle sind in Fig. 1 auf den Leitungen 21 dekodiert und im ODER-Gatter 22 verknüpft und werden über die Leitung 23 der Zähltakt-Schaltung 10 zugeführt.

Die in Fig. 2 dargestellte Schaltung kann im übrigen auch für beliebige Zähler, insbesondere bei sehr langen Zählern, verwendet werden, um ein Übertragssignal oder ein Borgsignal zu erzeugen, ohne die gesamte Zählerstellung dekodieren zu müssen.

## Patentansprüche

1. Mikroprozessor mit einer Verarbeitungseinheit (20) zum Empfangen und Entschlüsseln von Befehlen, einem internen Datenbus (12), einem Programmspeicher (30) zur Abgabe von Befehlen, einem Programmzähler (8) für eine vorgegebene Anzahl Adreßbits zum Adressieren des Programmspeichers (30), einem ersten Register (2) mit einem Eingang und mit einem Ausgang zum Liefern zusätzlicher höchstwertiger Adreßbits für den Programmspeicher (30) an einem Adreßausgang (7b), einem zweiten Register (4) mit einem Eingang, der mit dem internen Datenbus (12) gekoppelt ist, und mit einem Ausgang, der mit dem Eingang des ersten Registers (2) gekoppelt ist, einer Zähltaktschaltung (10) mit Eingängen, die an die Ausgänge des Programmzählers (8) angeschlossen sind, und mit Zähltaktausgängen (11a, 11b), die mit weiteren Eingängen des ersten Registers (2) verbunden sind, um den Inhalt des ersten Registers zu verändern, wenn der Programmzähler (8) die maximale oder die minimale Stellung kreuzt, und einem Stack zum Speichern von Rücksprungdaten,
dadurch gekennzeichnet, daß der Ausgang des ersten Registers (2) über einen von der Verarbeitungseinheit (20) gesteuerte Schalter (16) mit dem internen Datenbus (12) gekoppelt ist, um bei einem Unterprogrammaufruf den Inhalt des ersten Registers (2) zwischenzuspeichern und mit dem ersten Befehl des Unterprogramms im Stack abzulegen und am Ende des Unterprogramms aus dem Stack in das zweite Register zurückzuschreiben, und daß der Ausgang des ersten Registers (2) über UND-Gatter (6) mit dem Adreßausgang (7b) verbunden ist und ein gemeinsamer Steuereingang (6a) der UND-Gatter (6) mit einer Interrupt-Schaltung (28, 32, 38) verbunden ist, um die UND-Gatter (6) wenigstens zu Beginn der Verarbeitung eines Interrupt-Signals zu sperren.

2. Mikroprozessor nach Anspruch 1, dadurch gekennzeichnet, daß der Mikroprozessor mit einer Anzahl direkt adressierter Spezial-Funktions-Register ausgestattet ist und, daß das erste und das zweite Register (2, 4) gemeinsam ein zusätzliches Spezial-Funktions-Register bilden.

3. Mikroprozessor nach Anspruch 1 oder 2,
dadurch gekennzeichnet, daß die Interrupt-Schaltung (28, 32) ein erstes Speicherglied (28) enthält, das beim Auftreten eines Interrupt-Signals gesetzt und bei der Durchführung eines Adressensprungs zurückgesetzt wird und dessen Ausgang mit dem Steuereingang (6a) der UND-Gatter (6) über ein NAND-Gatter (32) gekoppelt ist, von dem ein weiterer Eingang mit der Verarbeitungseinheit (20) zum Empfangen eines Signals während der Ausführung einer Interrupt-Routine gekoppelt ist.

4. Mikroprozessor nach einem der vorhergehenden Ansprüche,
dadurch gekennzeichnet, daß die Zähltakt-Schaltung (10) mit Ausgängen für die beiden höchstwertigen Adreßbits (A15, A14) des Programmzählers (8) gekoppelt ist und eine zweite Speicherstufe (40), die den Signalzustand des höchstwertigen Adreßbits (A15) für eine vorgegebene Zeitdauer nach einem Zustandswechsel dieses Adreßbits speichert, sowie zwei Gatter (42, 44) mit je wenigstens drei Eingängen enthält, wobei die Eingänge jedes Gatters mit wenigstens einem Ausgang (41) der Speicherstufe (40) sowie mit den Ausgängen für die beiden höchstwertigen Adreßbits (A15, A14) derart gekoppelt sind, daß das eine Gatter (42) einen Aufwärts-Zähltakt für das erste Register (2) abgibt, wenn beide Adreßbits ihren Zustand von hoch nach niedrig wechseln, und das andere Gatter (44) einen Abwärts-Zähltakt für das erste Register (2) abgibt, wenn beide Adreßbits ihren Zustand von niedrig nach hoch wechseln.

## Claims

1. A microprocessor, comprising a processing unit (20) for receiving and decoding instructions, an internal data bus (12), a program memory (30) for supplying instructions, a program counter (8) for a predetermined number of address bits for addressing the program memory (30), a first register (2) which comprises an input and an output for supplying additional most-significant address bits for the program memory (30) on an address output (7b), a second register (4) which comprises an input which is coupled to the internal data bus (12) and an output which is coupled to the input of the first register (2), a counting pulse circuit (10) which comprises inputs which are connected to the outputs of the program counter (8), and counting pulse outputs (11a, 11b) which are connected to further inputs of the first register (2) is order to change the contents of the first register when the program counter (8) passes through its maximum or minimum position, and a stack for storing return jump data,
characterized in that the output of the first register (2) is coupled to the internal data bus (12), *via* a switch (16) which is controlled by the processing unit (20), in order to buffer the contents of the first register (2) in the event of a subroutine call, to store these contents in the stack by way of the first instruction of the subroutine, and to write these contents from the stack into the second register at the end of the subroutine, and that the output of the first register (2) is connected to the address output (7b) *via* AND-gates (6) and a common control input (6a) of the AND-gates (6) is connected to an interrupt circuit (28, 32, 38) in order to block the AND-gates (6) at least at the beginning of the processing of an interrupt signal.

2. A microprocessor as claimed in Claim 1, characterized in that the microprocessor comprises a number of directly addressed special-function registers, and that the first and the second register (2, 4) together form an additional special-function register.

3. A microprocessor as claimed in Claim 1 or 2, characterized in that the interrupt circuit (28, 32) comprises a first storage member (28) which is set in response to the occurrence of an interrupt signal and is reset in upon execution of an address jump, its output being coupled to the control input (6a) of the AND-gates (6) *via* a NAND-gate (32), a further input of which is coupled to the processing unit (20) in order to receive a signal during the execution of an interrupt routine.

4. A microprocessor as claimed in any one of the preceding Claims,
characterized in that the counting pulse circuit (10) is coupled to outputs for the two most-significant address bits (A15, A14) of the program counter (8) and comprises a second memory stage (40) for storing the signal state of the most-significant address bit (A15) for a given period of time after a change of state of this address bit and two gates (42, 44), each of which comprises at least three inputs, the inputs of each gate being coupled to at least one output (41) of the memory stage (40) and to the outputs for the two most-significant address bits (A15, A14) so that one gate (42) outputs a count-up pulse for the first register (2) when both address bits change their state from high to low, and the other gate (44) outputs a count-down pulse for the first register (2) when both address bits change their state from low to high.

## Revendications

1. Microprocesseur avec une unité de traitement (20) pour la réception et le décodage d'instructions, un bus de données interne (12), une mémoire de programme (30) en vue de la délivrance d'instructions, un compteur de programme (8) pour un nombre préalablement déterminé de bits d'adresse en vue de l'adressage de la mémoire du programme (30), un premier registre (A2) avec une entrée et une sortie en vue de la délivrance de bits d'adresse de valeur maximale supplémentaires pour la mémoire de programme (30) à une sortie d'adresse (7b), un deuxième registre (4) avec une entrée qui est couplée au bus de données interne (12) et avec une sortie qui est couplée à l'entrée du premier registre (2), un circuit de rythme de comptage (10) avec des entrées qui sont raccordées aux sorties du compteur de programme (8) et avec des sorties de rythme de comptage (11a, 11b) qui sont reliées aux autres entrées du premier registre (2) pour modifier le contenu du premier registre lorsque le compteur de programme (8) croise la position maximale ou minimale et une pile en vue de l'enregistrement des données de renvoi,
caractérisé en ce que la sortie du premier registre (2) est couplée par l'intermédiaire d'un commutateur (16) commandé par l'unité de traitement (20) au bus de données interne (12) pour sauver temporairement le contenu du premier registre (2) en cas d'appel du sous-programme et le déposer dans la pile avec la première instruction du sous-programme et le recopier à la fin du sous-programme de la pile dans le deuxième registre et que la sortie du premier registre (2) est reliée par l'intermédiaire de la grille ET (6) avec la sortie d'adresse (7b) et une entrée de commande (6a) commune de la grille ET (6) est reliée à un circuit d'interruption (28, 32, 38) pour bloquer la grille ET au moins au début du traitement d'un signal d'interruption.

2. Microprocesseur selon la revendication 1, caractérisé en ce que le microprocesseur est muni de plusieurs registres à fonction spéciale adressés directement, que les premier et deuxième registres (2, 4) forment ensemble un registre à fonctions spéciales supplémentaire.

3. Microprocesseur selon l'une des revendications 1 ou 2, caractérisé en ce que le circuit d'interruption (28, 32) contient un premier organe de mémoire (28) qui est activé lors de l'apparition d'un signal d'interruption et réinitialisé lors de l'exécution d'un saut d'adresse et dont la sortie est couplée à l'entrée de commande (6a) de la grille ET (6) par l'intermédiaire d'une grille NON-ET (32) de laquelle une autre entrée est couplée avec l'unité de traitement (20) en vue de la réception d'un signal pendant l'exécution d'un programme d'interruption.

4. Microprocesseur selon l'une des revendications précédentes,
caractérisé en ce que le circuit du rythme de comptage (10) est couplé aux sorties pour les deux bits d'adresse de valeur maximale (A15, A14) du compteur de programme (8) et un deuxième étage de mémoire (40) qui enregistre l'état du signal du bit d'adresse de valeur maximale (A15) pendant une période de temps préalablement déterminée après un changement d'état de ce bit d'adresse ainsi que deux grilles (42, 44) avec, respectivement, au moins trois entrées, les entrées de chaque grille étant couplées avec au moins une sortie (41) de l'étage de mémoire (40) ainsi qu'aux sorties des deux bits d'adresse de valeur maximale (A15, A14) de telle sorte que l'une des grilles (42) délivre un rythme de comptage pour le premier registre (2) lorsque les deux bits d'adresse changent leur état d'une valeur élevée à une valeur faible et l'autre grille (44) délivre un rythme de décomptage pour le premier registre (2) lorsque les deux bits d'adresse changent leur état d'une position faible à une position élevée.
